# EUROPEAN PATENT SPECIFICATION

(11) **EP 3 182 012 B1**
(45) Date of publication and mention of the grant of the patent: **27.05.2020**
(21) Application number: 15844585.8
(22) Date of filing: 02.09.2015
(51) Int. Cl.: F23R 3/16, F23R 3/46

(54) **COMBUSTOR AND GAS TURBINE COMPRISING SAME**
VERBRENNER UND GASTURBINE DAMIT
CHAMBRE DE COMBUSTION ET SA TURBINE À GAZ

(30) Priority: 25.09.2014 JP 2014195204
(43) Date of publication of application: 21.06.2017
(73) Proprietor: Mitsubishi Hitachi Power Systems, Ltd., Yokohama-shi, Kanagawa 220-8401 (JP)
(72) Inventor: MIYAUCHI Kotaro, Yokohama-shi Kanagawa 220-8401 (JP); NISHIDA Koichi, Yokohama-shi Kanagawa 220-8401 (JP); AKAMATSU Shinji, Yokohama-shi Kanagawa 220-8401 (JP); SAITO Keijiro, Tokyo 108-8215 (JP); TAKIGUCHI Satoshi, Tokyo 108-8215 (JP); SAITO Toshihiko, Tokyo 108-8215 (JP)
(74) Representative: Mader, Joachim
(86) International application number: PCT/JP2015/074930
(87) International publication number: WO 2016/047397

(56) References cited:
- WO-A1-2013/077394
- GB-A- 1 304 177
- JP-A- 2005 315 457
- JP-A- 2005 315 457
- US-A1- 2012 198 854
- US-A1- 2013 074 501
- US-A1- 2013 160 453
- US-A1- 2014 238 029

## Description

### Technical Field

The present invention relates to a combustor in which a sound attenuator is provided on an outer circumferential side of a combustion liner in which a fuel is burned, and to a gas turbine including the combustor.

### Background Art

A gas turbine includes a compressor that compresses air, a combustor that burns fuel in the air compressed by the compressor to generate a combustion gas, and a turbine that is driven by the combustion gas from the combustor.

As disclosed in Patent Document 1 indicated below, the combustor of the gas turbine includes, for example, a combustion liner (or transition piece) in which the fuel is burned, a fuel jetting device that jets the fuel and air into the combustion liner, a sound attenuator including an acoustic case provided on an outer circumferential side of the combustion liner, and a restrictor that reduces a flow path of a gas in the combustion liner. The restrictor is disposed in a position distanced from the sound attenuator in an axial direction of the combustion liner, and more specifically, in a position downstream from the sound attenuator.

The acoustic case includes part of a plate that forms the combustion liner, and an acoustic cover defining, in conjunction with this part of the plate, a space on the outer circumferential side of the combustion liner. A plurality of sound absorbing holes are defined in the part of the plate of the combustion liner that forms the acoustic case. The plurality of sound absorbing holes penetrate from within the combustion liner to a space within the acoustic case. Air vibrations produced when the fuel is burned in the combustion liner such as combustion oscillations, or noise, passes through the sound absorbing holes, spreads out within the acoustic case, and is quietened therein. Additionally, air within the acoustic case is discharged into the combustion liner through the sound absorbing holes defined in the combustion liner. Accordingly, high-temperature gas inside the combustion liner does not flow into the acoustic case.

Patent Document 2 suggests providing a combustor for a gas turbine, wherein an inner cylinder of the combustor is formed into a trumpet shape of which a diameter is gradually increased toward a downstream side.

### Citation List

### Patent Document

Patent Document 1: Japanese Unexamined Patent Application Publication No. 2007-309644A
Patent Document 2 : JP 2005 315457 A

### Summary of the Invention

### Technical Problem

The air discharged into the combustion liner from the acoustic case cools the inner circumferential side of the combustion liner, and also cools combustible gases discharged into the combustion liner from a burner, such as fuel gases and premixed gas obtained by premixing fuel and air. When a combustible gas is cooled, the fuel contained in that combustible gas does not burn completely, which produces CO. Generally, from the standpoint of environmental protection, there is demand for a reduction in the amount of CO produced by the incomplete burning of fuel in combustors.

Accordingly, an object of the present invention is to provide a combustor that can reduce an amount of CO discharged, as well as a gas turbine including such a combustor.

### Solution to Problems

According to claim 1, as presented, for achieving the above-described object, a combustor includes a combustion liner, a sound attenuator, and a restrictor. The combustion liner has a tubular shape centered on an axis and is configured to allow a fuel to be burned on an inner circumferential side of the combustion liner. The sound attenuator includes part of a plate forming the combustion liner and an acoustic cover defining, in conjunction with the part of the plate, a space on an outer circumferential side of the combustion liner. The restrictor is configured to, in a part in an axial direction in which the axis extends, narrow and then widen a flow path of a gas flowing in the combustion liner, as the restrictor extends from an upstream side that is one side in the axial direction toward a downstream side that is another side in the axial direction. A plurality of through holes penetrating to the space from within the combustion liner are defined in the part of the plate of the sound attenuator. A relative position in the axial direction of the restrictor with respect to the sound attenuator is a position such that at least some of the plurality of through-holes in the sound attenuator are present within a region spanning, in the axial direction, from a position of a minimum restrictor diameter of the restrictor to positions, on an upstream side and a downstream side, at a distance equivalent to a minimum restrictor radius that is half the minimum restrictor diameter.

Air within the space of the sound attenuator is discharged into the combustion liner through the through-holes in the sound attenuator. Accordingly, high-temperature gas inside the combustion liner does not flow into the space. The air discharged into the combustion liner from the space in the sound attenuator cools the fuel flowing within the combustion liner. There are thus cases where some of the fuel is not completely burned, which produces CO.

A vortex is formed in a region, within the combustion liner, downstream from the position of the minimum restrictor diameter and located toward the outer circumference of the combustion liner. In this vortex, the CO produced in a region along the inner circumferential surface of the combustion liner mixes with high-temperature combustion gas produced in a region distanced inward from the inner surface of the combustion liner in the radial direction. The CO produced in the region along the inner circumferential surface of the combustion liner is heated by the high-temperature combustion gas and burns as a result.

Basically, the gas within the combustion liner flows from the upstream side toward the downstream side. However, in reality, this flow is complex. Specifically, a plurality of vortices are formed in a complex manner within the combustion liner. An average diameter of the plurality of vortices is substantially equal to the minimum restrictor radius of the restrictor. According to this combustor, at least some of the through-holes in the sound attenuator are present in a region spanning from the position of the minimum restrictor diameter to positions, on the upstream side and the downstream side, at a distance equivalent to the minimum restrictor radius. Accordingly, even if the fuel present in the vortices within the combustion liner is cooled by the air discharged into the combustion liner from the sound attenuator and CO is produced as a result, much of the CO produced in the vortices can be burned due to the vortex formed on the downstream side of the restrictor present near the sound attenuator, before moving into other vortices and dispersing.

Thus according to this combustor, even if CO is produced by the air discharged from the sound attenuator into the combustion liner, that CO can be burned immediately.

Here, in the combustor according to the above-described aspect, the restrictor may be disposed downstream from the sound attenuator.

According to this combustor, even if CO is produced in a region along the inner circumferential surface of the combustion liner by the air discharged from the sound attenuator into the combustion liner, that CO can be burned due to the vortex formed downstream from the restrictor disposed on the downstream side of the sound attenuator.

In the combustor in which the restrictor is disposed downstream from the sound attenuator, the through-holes in the sound attenuator may be defined so as to shift downstream gradually as the through-holes extend from the outer circumferential side of the combustion liner toward the inner circumferential side of the combustion liner.

According to this combustor, air discharged from the sound attenuator into the combustion liner flows along the inner circumferential surface of the combustion liner, and then also flows along a surface of the restrictor. As such, according to this combustor, the restrictor can be cooled through film cooling by the air discharged from the sound attenuator, which makes it possible to suppress thermal damage to the restrictor.

In the combustor according to the above-described aspect, the restrictor may be disposed within a region, in the axial direction, in which the sound attenuator is present.

Some of the air in the sound attenuator is discharged directly to the upstream side of the minimum restrictor diameter of the restrictor, and the remaining air is discharged directly to the downstream side of the minimum restrictor diameter of the restrictor. Thus according to this combustor, before CO is produced by the air discharged into the combustion liner from the sound attenuator, that air can mix with high-temperature combustion gas within the vortex downstream from the restrictor. Additionally, according to this combustor, even if CO is produced by the air discharged into the combustion liner from the sound attenuator, that CO can be burned immediately due to the effect of the restrictor.

Additionally, in the combustor according to the above-described aspect, the restrictor may be disposed upstream from the sound attenuator.

All of the air from the sound attenuator is discharged downstream from the position of the minimum restrictor diameter of the restrictor, into the vortex formed on the downstream side of the minimum restrictor diameter. Thus according to this combustor, before CO is produced by the air discharged into the combustion liner from the sound attenuator, that air can mix with high-temperature combustion gas within the vortex downstream from the restrictor. Additionally, according to this combustor, even if CO is produced by the air discharged into the combustion liner from the sound attenuator, that CO can be burned immediately due to the effect of the restrictor.

In any of the combustors described above, the plurality of through-holes penetrating to the space from within the combustion liner may be defined in the part of the plate of the sound attenuator. A relative position in the axial direction of the restrictor with respect to the sound attenuator may be a position such that all of the through-holes in the sound attenuator are present within a region spanning, in the axial direction, from a position of the minimum restrictor diameter to positions, on an upstream side and a downstream side, at a distance equivalent to the minimum restrictor radius.

According to this combustor, the relative position of the restrictor, in the axial direction, is closer to the sound attenuator than that in the above-described combustors. As such, according to this combustor, even if CO is produced by the air discharged into the combustion liner from the sound attenuator, that CO can be burned more quickly.

Additionally, in any of the combustors described above, a plurality of the sound attenuators may be disposed at intervals in a circumferential direction based on the axis.

Additionally, in any of the combustors described above, a minimum restrictor portion that is a part of the restrictor having the minimum restrictor diameter, and a medium restrictor portion that is a part of the restrictor having a medium restrictor diameter greater than the minimum restrictor diameter, may be formed in the restrictor alternately in the circumferential direction.

In the combustor in which the minimum restrictor portion and the medium restrictor portion are formed in the restrictor, a plurality of the sound attenuators may be disposed at intervals in a circumferential direction based on the axis. Each of the plurality of sound attenuators may be disposed within a region through which virtual lines pass. The virtual lines extend in the axial direction from ends of a corresponding minimum restrictor portion of a plurality of minimum restrictor portions in the circumferential direction.

A vortex that is stronger than in other areas of the restrictor is formed on the downstream side of the end of the minimum restrictor portion in the circumferential direction. As such, when the end of the minimum restrictor portion in the circumferential direction is present within a region in which the corresponding sound attenuator is present, downstream from that region, or upstream from that region, even if CO is produced by the air discharged into the combustion liner from the sound attenuator, that CO can be efficiently burned on the downstream side of the end of the minimum restrictor portion in the circumferential direction.

According to the invention, at least one passage penetrating to the space from an exterior is defined in the acoustic cover of the sound attenuator. Additionally, in the combustor described above, at least one passage may be defined in the combustion liner. An opening of the at least one passage is defined in a part of the outer circumferential surface of the combustion liner that is not covered by the acoustic cover. The at least one passage passes between the outer circumferential surface and the inner circumferential surface of the combustion liner. Another opening of the at least one passage is defined in a part of the outer circumferential surface of the combustion liner that is covered by the acoustic cover.

According to an aspect of the present invention for achieving the above-described object, a gas turbine includes any one of the above-described combustors, a compressor that compresses air and supplies the air to the combustor, and a turbine that is driven by combustion gas formed by a fuel being burned in the combustor. -

### Advantageous Effects of Invention

According to an aspect of the present invention, an amount of CO discharged can be reduced.

### Brief Description of Drawings

FIG. 1 is a schematic view illustrating the configuration of a gas turbine according to a first embodiment of the present invention.
FIG. 2 is a cross-sectional view of the vicinity of a combustor in the gas turbine according to the first embodiment of the present invention.
FIG. 3 is a cross-sectional view of the combustor according to the first embodiment of the present invention.
FIG. 4 is a cross-sectional view of the combustor according to the first embodiment of the present invention, in the vicinity of a sound attenuator and a restrictor.
FIG. 5 is a cross-sectional view of a combustor according to a second embodiment of the present invention, in the vicinity of a sound attenuator and a restrictor.
FIG. 6 is a cross-sectional view of a combustor according to a third embodiment of the present invention, in the vicinity of a sound attenuator and a restrictor.
FIG. 7 is a cross-sectional view of a combustor according to a fourth embodiment of the present invention, in the vicinity of a sound attenuator and a restrictor.
FIG. 8 is an explanatory diagram illustrating a relative positional relationship between a sound attenuator and a restrictor according to a modified example of the fourth embodiment of the present invention.
FIG. 9 is a cross-sectional view of a combustor according to a first modified example of the first embodiment of the present invention, in the vicinity of a sound attenuator and a restrictor.
FIG. 10 is a cross-sectional view of a combustor according to a second modified example of the first embodiment of the present invention, in the vicinity of a sound attenuator and a restrictor.
FIG. 11 is a cross-sectional view of a combustor according to a third modified example of the first embodiment of the present invention, in the vicinity of a sound attenuator and a restrictor.

### Description of Embodiment

An embodiment of a combustor and a gas turbine including the same, as well as various other embodiments and modified examples of the combustor, according to the present invention, will be described in detail hereinafter with reference to the drawings.

### First Embodiment of Combustor and Gas Turbine Including Same

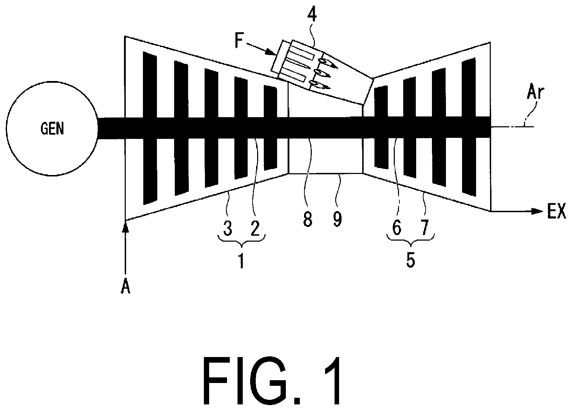

A first embodiment of a combustor and a gas turbine including the same according to the present invention will be described using FIGS. 1 to 4.

As illustrated in FIG. 1, a gas turbine according to the present embodiment includes a compressor 1 that generates compressed air by compressing outside air, a plurality of combustors 4 that generate a combustion gas by burning fuel F in the compressed air, and a turbine 5 driven by the combustion gas.

The compressor 1 includes a compressor rotor 2 that rotates around a rotational axis Ar and a compressor casing 3 that covers the compressor rotor 2 while allowing the compressor rotor 2 to rotate. The turbine 5 includes a turbine rotor 6 that rotates around a rotational axis Ar and a turbine casing 7 that covers the turbine rotor 6 while allowing the turbine rotor 6 to rotate. The rotational axis Ar of the compressor rotor 2 and the rotational axis Ar of the turbine rotor 6 are located on the same straight line. The compressor rotor 2 and the turbine rotor 6 are connected with each other to form a gas turbine rotor 8. Meanwhile, the compressor casing 3 and the turbine casing 7 are connected with each other to form a gas turbine casing 9.

A generator rotor, for example, is connected to the gas turbine rotor 8. Furthermore, the combustors 4 are fixed to the gas turbine casing 9.

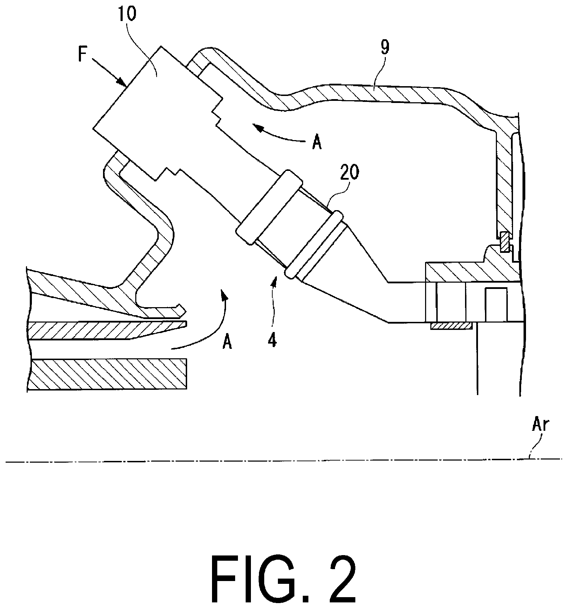

As illustrated in FIG. 2, each combustor 4 includes a combustion liner (or transition piece) 20 and a fuel jetting device 10. The fuel F is burned inside the combustion liner 20, and the combustion gas generated by the fuel F being burned is guided to the turbine 5. The fuel jetting device 10 jets the fuel F and air A into the combustion liner 20.

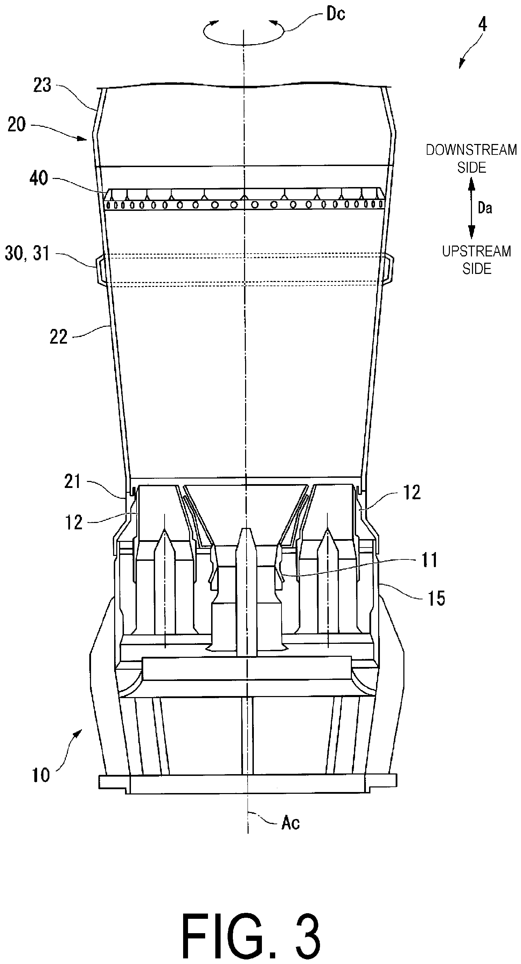

As illustrated in FIG. 3, the fuel jetting device 10 includes a pilot burner 11, a plurality of main burners 12, and a burner holding cylinder 15. The pilot burner 11 burns the jetted fuel through diffusion combustion. The plurality of main burners 12 burn the jetted fuel through premixed combustion. The burner holding cylinder 15 holds the pilot burner 11 and the plurality of main burners 12.

The pilot burner 11 is disposed on a combustor axis Ac. The plurality of main burners 12 are arranged in a circumferential direction, centered on the combustor axis Ac, while surrounding the outer circumferential side of the pilot burner 11. In the following, a direction in which the combustor axis Ac extends is referred to as an axial direction Da, one side in the axial direction Da is referred to as an upstream side, and the other side in the axial direction Da is referred to as a downstream side. Additionally, the circumferential direction centered on the combustor axis Ac is simply referred to as a circumferential direction Dc.

The combustion liner 20 includes a connecting portion 21 on an inner circumferential side of which downstream side portions of the plurality of main burners 12 are located, a combustion portion 22 forming a fuel region in which the fuel jetted from the main burners 12 and the pilot burner 11 is burned, and a combustion gas guide portion 23 that guides the combustion gas generated by the fuel being burned to the turbine 5. Both the connecting portion 21 and the combustion portion 22 form a cylindrical shape centered on the combustor axis Ac. The combustion gas guide portion 13a has a tubular shape. An upstream end of the connecting portion 21 of the combustion liner 20 is connected to the burner holding cylinder 15. The combustion portion 22 of the combustion liner 20 is formed on the downstream side of the connecting portion 21 of the combustion liner 20. The combustion gas guide portion 23 of the combustion liner 20 is formed on the downstream side of the combustion portion 22 of the combustion liner 20.

The combustor 4 further includes a sound attenuator 30 including an acoustic case 31 provided on an outer circumferential side of the combustion liner 20, and a restrictor 40 that reduces a flow path of gas within the combustion liner 20.

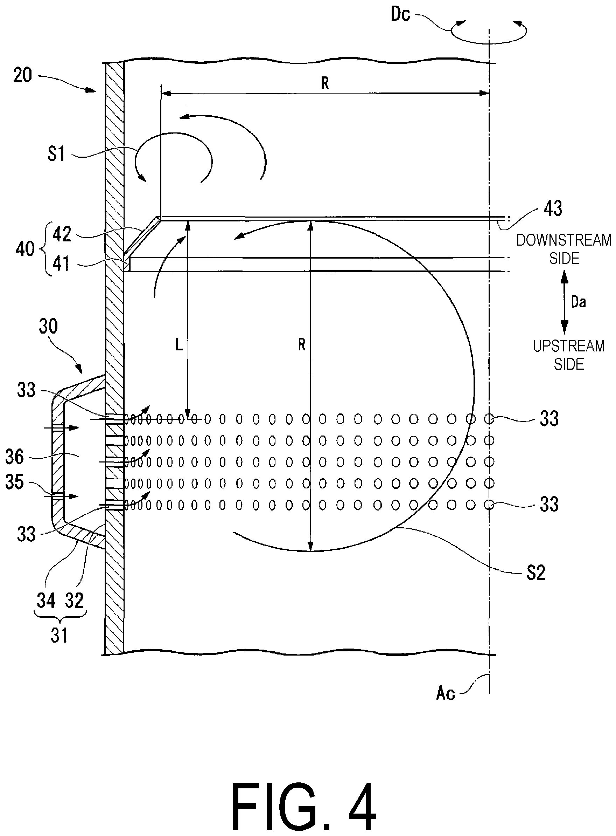

As illustrated in FIG. 4, the acoustic case 31 includes a liner-side case formation plate portion 32 that is part of a plate that forms the combustion liner 20, and an acoustic cover 34 that in conjunction with the liner-side case formation plate portion 32, defines a resonance space 36 on the outer circumferential side of the combustion liner 20. The acoustic cover 34 covers a region that, of the plate that forms the combustion liner 20, corresponds to part of the combustion liner 20 in the axial direction Da and spans the entire combustion liner 20 in the circumferential direction Dc. As such, the liner-side case formation plate portion 32 is a portion that forms a region that, of the plate that forms the combustion liner 20, corresponds to part of the combustion liner 20 in the axial direction Da and spans the entire combustion liner 20 in the circumferential direction Dc. A plurality of through-holes 33 that penetrate from inside the combustion liner 20 to the resonance space 36 are defined in the liner-side case formation plate portion 32 of the combustion liner 20. Additionally, a plurality of passages 35 that penetrate from the exterior to the resonance space 36 are defined in the acoustic cover 34 in order to allow the exterior and the resonance space 36 to communicate.

The passages 35 serve as drain passages for discharging drainage that has accumulated in the acoustic case 31, as air introduction passages for introducing outside air into the acoustic case 31, and the like. Meanwhile, the through-holes 33 serve as sound absorbing holes for guiding air vibrations produced when the fuel is burned in the combustion liner 20 such as combustion oscillations, or noise, into the acoustic case 31, as air discharge holes for discharging air present in the acoustic case 31 into the combustion liner 20, and the like.

The restrictor 40 includes a connecting portion 41 connected to an inner circumferential surface of the combustion liner 20, and a diameter reducing portion 42 in which the inner diameter of the restrictor 40 gradually decreases as the restrictor 40 extends toward the downstream side. The connecting portion 41 forms a cylindrical shape centered on the combustor axis Ac. The diameter reducing portion 42 is formed integrally with the connecting portion 41. An inner diameter of a downstream end of the diameter reducing portion 42 corresponds to a minimum restrictor diameter 43, where the inner diameter of the diameter reducing portion 42 is the narrowest. The restrictor 40 gradually narrows a flow path of gas flowing within the combustion liner 20, and the flow path then suddenly becomes larger downstream from the minimum restrictor diameter 43. The sound attenuator 30 is provided upstream from the restrictor 40.

A relative position in the axial direction Da of the restrictor 40 with respect to the sound attenuator 30 is a position such that at least some of the through-holes 33 in the sound attenuator 30 are present within a region spanning, in the axial direction Da, from the position of the minimum restrictor diameter 43 to positions, on an upstream side and a downstream side, at a distance equivalent to a minimum restrictor radius R that is half the minimum restrictor diameter 43. Specifically, in the present embodiment, a distance L from the position of the minimum restrictor diameter 43 to the through-holes 33 that, of the plurality of through-holes 33 in the sound attenuator 30, are closest to the restrictor 40, is shorter than the minimum restrictor radius R. Furthermore, in the present embodiment, a distance from the position of the minimum restrictor diameter 43 to the through-holes 33 that, of the plurality of through-holes 33 in the sound attenuator 30, are farthest from the restrictor 40, is also shorter than the minimum restrictor radius R. As such, in the present embodiment, all of the through-holes 33 in the sound attenuator 30 are present in a region spanning from the position of the minimum restrictor diameter 43 to a position upstream therefrom at a distance equivalent to the minimum restrictor radius R.

Actions and effects of the gas turbine according to the present embodiment will be described next.

The compressor 1 sucks in and compresses outside air. The air compressed by the compressor 1 is guided into the main burners 12 and the pilot burner 11 of each combustor 4. Fuel is supplied to the main burners 12 and the pilot burner 11 from a fuel supply source. Each main burner 12 discharges premixed gas, obtained by premixing fuel and air, into the combustion portion 22 of the combustion liner 20. The premixed gas is burned through premixed combustion in the combustion portion 22. The pilot burner 11, meanwhile, jets fuel and air that have not been premixed into the combustion portion 22 of the combustion liner 20. This fuel is burned in the combustion portion 22 through diffusion combustion. High-temperature, high-pressure combustion gas generated by the fuel being burned in the combustion portion 22 of the combustion liner 20 is guided into a gas flow path of the turbine 5 by the combustion gas guide portion 23 of the combustion liner 20 to rotate the turbine rotor.

When the fuel is burned in the combustion liner 20, there are cases where the burning produces combustion oscillations. In the present embodiment, air vibrations produced when the fuel is burned in the combustion liner 20 such as combustion oscillations, or noise, is suppressed by the sound attenuator 30 provided on the outer circumferential side of the combustion liner'20. The acoustic case 31 of the sound attenuator 30 constitutes a Helmholtz resonance box. As such, noise produced by the fuel being burned in the combustion liner 20 passes through the through-holes 33, spreads out within the acoustic case 31, and is quieted therein.

Some of the air compressed by the compressor 1 flows into the acoustic case 31 from the exterior through the passages 35 in the acoustic case 31. The air within the acoustic case 31 is discharged into the combustion liner 20 through the through-holes 33 in the acoustic case 31. Accordingly, high-temperature gas inside the combustion liner 20 does not flow into the acoustic case 31.

The combustion liner 20 is cooled using steam generated at other locations, air compressed by the compressor 1, or the like as a cooling medium, for the purpose of protecting the combustion liner 20 from flames, high-temperature combustion gas, and the like. Thus, of the premixed gas discharged from the main burner 12, the premixed gas flowing in a region along the inner circumferential surface of the combustion liner 20 is cooled. Depending on the degree of cooling, the gas is not completely burned, which produces CO. In other words, depending on the operating state of the gas turbine, there are cases where CO is produced in the region along the inner circumferential surface of the combustion liner 20.

Accordingly, in the present embodiment, the restrictor 40 is provided in the combustion liner 20 in order to suppress the amount of CO discharged from the combustor 4. As described earlier, the restrictor 40 gradually narrows the flow path of gas flowing within the combustion liner 20, and then suddenly widens the flow path on the downstream side of the minimum restrictor diameter 43. Accordingly, a vortex S1 is formed in a region, within the combustion liner 20, downstream from the position of the minimum restrictor diameter 43 and located toward the outer circumference of the combustion liner 20. In this vortex S1, the CO produced in the region along the inner circumferential surface of the combustion liner 20 mixes with high-temperature combustion gas produced in a region distanced inward from the inner surface of the combustion liner 20 in the radial direction. The CO produced in the region along the inner circumferential surface of the combustion liner 20 is heated by the high-temperature combustion gas and burns as a result.

Thus, according to the present embodiment, even if CO is produced in the region along the inner circumferential surface of the combustion liner 20 when the operating state of the gas turbine is a predetermined operating state, ensuring that the CO is burned on the downstream side of the restrictor 40 makes it possible to suppress the amount of CO discharged from the combustor 4.

Incidentally, air is discharged into the combustion liner 20 from the acoustic case 31 through the through-holes 33. This air mixes with the premixed gas discharged from the main burner 12 and flows downstream in the combustion liner 20 along with the premixed gas. When the air from the acoustic case 31 mixes with the premixed gas, there are cases where the premixed gas is cooled, some of the premixed gas is not completely burned, and CO is produced as a result.

Basically, the gas within the combustion liner 20 flows from the upstream side toward the downstream side. However, in reality, this flow is complex. Specifically, a plurality of vortices S2 are formed in a complex manner within the combustion liner 20. An average diameter of the plurality of vortices S2 is substantially equal to the minimum restrictor radius R of the restrictor 40. Meanwhile, as described earlier, the distance L from the through-holes 33, of the plurality of through-holes 33 in the sound attenuator 30, that are located furthest downstream, to the position of the minimum restrictor diameter 43 of the restrictor 40, is shorter than the minimum restrictor radius R. Accordingly, even if the premixed gas present in the vortices S2 within the combustion liner 20 is cooled by the air discharged into the combustion liner 20 from the acoustic case 31 and CO is produced as a result, much of the CO produced in the vortices S2 can be burned due to the effect of the restrictor 40 present near the sound attenuator 30 before moving into other vortices S2 and dispersing.

Thus, according to the present embodiment, even if CO is produced by the air discharged into the combustion liner 20 from the acoustic case 31, that CO can be burned immediately, which makes it possible to suppress the amount of CO discharged from the combustor 4.

### Second Embodiment of Combustor

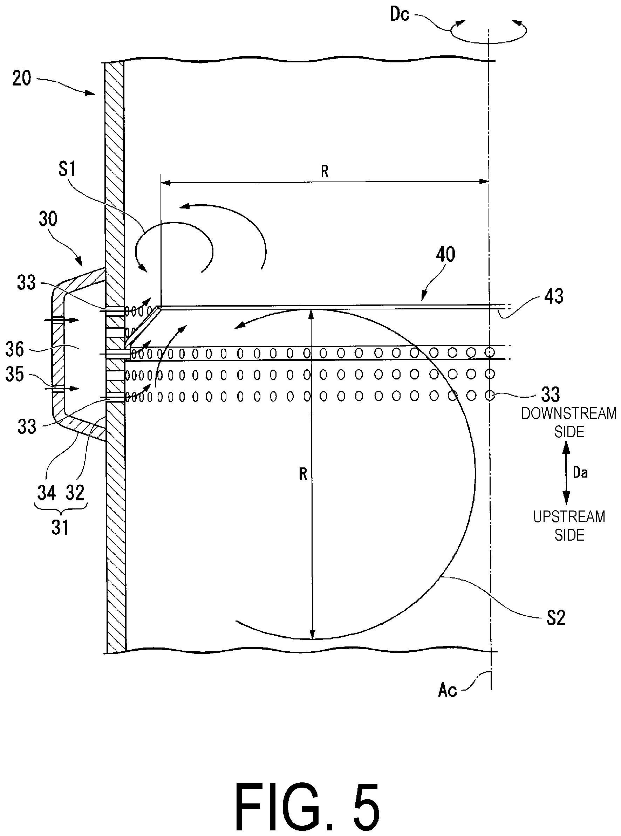

A second embodiment of a combustor will be described using FIG. 5.

In the combustor according to the present embodiment, the relative positions of the sound attenuator 30 and the restrictor 40 are changed from those in the combustor according to the above-described first embodiment. Other configurations are the same as in the combustor according to the above-described first embodiment.

In the above-described first embodiment, the restrictor 40 is located downstream from the sound attenuator 30. However, in the present embodiment, the restrictor 40 is disposed in a region, in the axial direction Da, where the sound attenuator 30 is present. Therefore, in the present embodiment too, at least some of the through-holes 33 in the sound attenuator 30 are present in a region spanning, in the axial direction Da, from the position of the minimum restrictor diameter 43 to positions, on the upstream side and the downstream side, at a distance equivalent to the minimum restrictor radius R, in the same manner as in the above-described first embodiment.

In the present embodiment, some of the air in the acoustic case 31 is discharged directly to the upstream side of the minimum restrictor diameter 43 of the restrictor 40, and the remaining air is discharged directly to the downstream side of the minimum restrictor diameter 43 of the restrictor 40. Accordingly, in the present embodiment, before CO is produced by the air discharged into the combustion liner 20 from the acoustic case 31, that air can mix with the high-temperature combustion gas within the vortex S1 downstream from the restrictor 40. Additionally, in the present embodiment, even if CO is produced by the air discharged into the combustion liner 20 from the acoustic case 31, that CO can be burned immediately due to the effect of the restrictor 40.

### Third Embodiment of Combustor

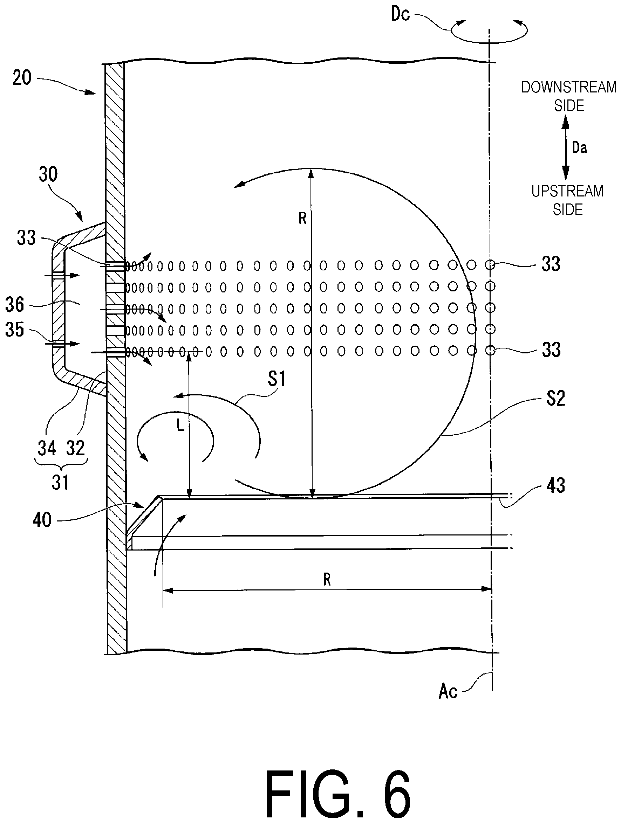

A third embodiment of a combustor will be described using FIG. 6.

Also in the combustor according to the present embodiment, the relative positions of the sound attenuator 30 and the restrictor 40 are changed from those in the combustor according to the above-described first embodiment. Other configurations are the same as in the combustor according to the above-described first embodiment.

In the above-described first embodiment, the restrictor 40 is located downstream from the sound attenuator 30. However, in the present embodiment, the restrictor 40 is disposed upstream from the sound attenuator 30. However, in the present embodiment, the distance L from the position of the minimum restrictor diameter 43 to the through-holes 33 that, of the plurality of through-holes 33 in the sound attenuator 30, are located closest to the restrictor 40, is shorter than the minimum restrictor radius R. Furthermore, in the present embodiment, the distance from the position of the minimum restrictor diameter 43 to the through-holes 33 that, of the plurality of through-holes 33 in the sound attenuator 30, are located farthest from the restrictor 40, is also smaller than the minimum restrictor radius R. As such, in the present embodiment, all of the through-holes 33 in the sound attenuator 30 are present in a region spanning from the position of the minimum restrictor diameter 43 to a position downstream therefrom at a distance equivalent to the minimum restrictor radius R.

All of the air from the acoustic case 31 is discharged downstream from the position of the minimum restrictor diameter 43 of the restrictor 40, into the vortex S1 formed on the downstream side of the minimum restrictor diameter 43. Accordingly, in the present embodiment too, before CO is produced by the air discharged into the combustion liner 20 from the acoustic case 31, that air can mix with the high-temperature combustion gas within the vortex S1 downstream from the restrictor 40, in the same manner as in the second embodiment. Furthermore, in the present embodiment, even if CO is produced by the air discharged into the combustion liner 20 from the acoustic case 31, that CO can be burned immediately due to the effect of the restrictor 40, in the same manner as in the second embodiment.

### Fourth Embodiment of Combustor

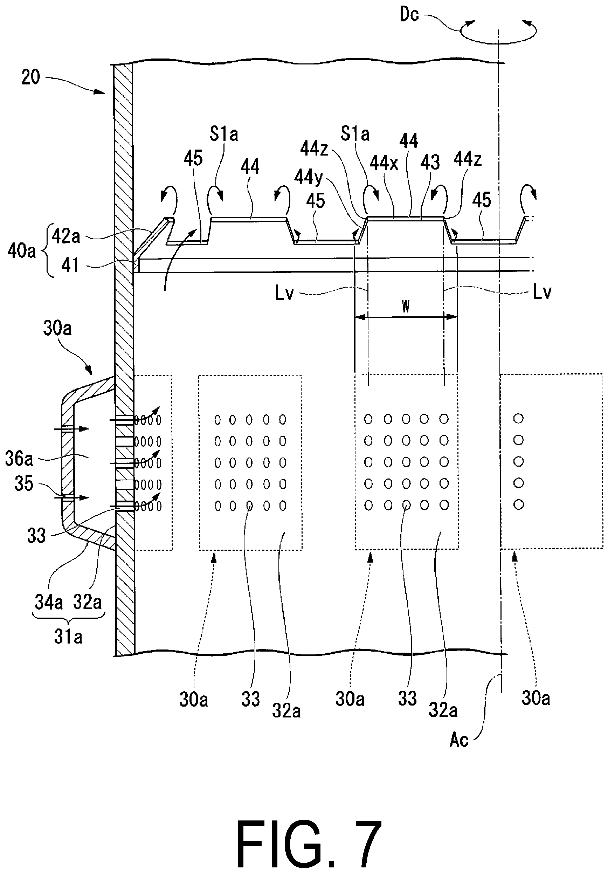

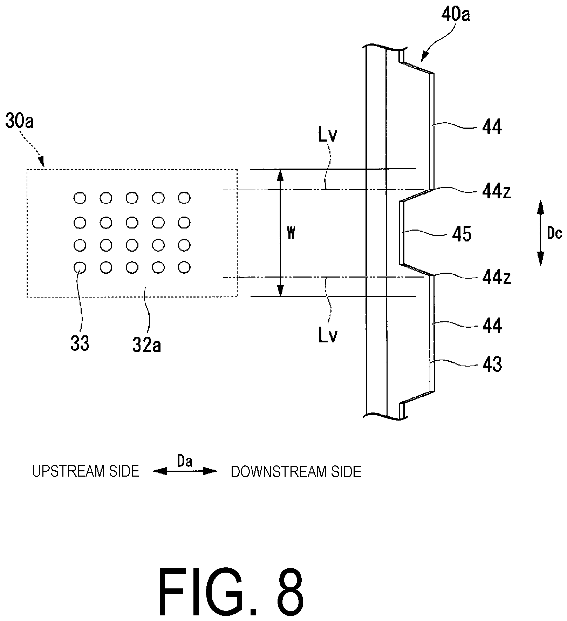

A fourth embodiment of a combustor will be described using FIGS. 7 and 8.

The combustor according to the present embodiment is obtained by changing the sound attenuator 30 and the restrictor 40 of the combustor according to the above-described first embodiment.

The sound attenuator 30 according to the above-described first embodiment includes the single acoustic cover 34 covering a region that corresponds to part of the combustion liner 20 in the axial direction Da and spans the entire combustion liner 20 in the circumferential direction Dc. In other words, in the combustor according to the above-described first embodiment, the single sound attenuator 30 is provided in a region corresponding to part of the combustion liner 20 in the axial direction Da. However, in the combustor according to the present embodiment, a plurality of sound attenuators 30a arranged at intervals in the circumferential direction Dc are provided in a region corresponding to part of the combustion liner 20 in the axial direction Da, as illustrated in FIG. 7.

Like the sound attenuator 30 according to the above-described first embodiment, each sound attenuator 30a according to the present embodiment includes a liner-side case formation plate portion 32a that is part of the plate forming the combustion liner 20, and an acoustic cover 34a that, in conjunction with the liner-side case formation plate portion 32a, defines a resonance space 36a on the outer circumferential side of the combustion liner 20. The acoustic cover 34a covers a region, of the plate that forms the combustion liner 20, corresponding to part of the combustion liner 20 in the axial direction Da and part of the combustion liner 20 in the circumferential direction Dc. As such, the liner-side case formation plate portion 32a according to the present embodiment is a portion that forms a region, of the plate that forms the combustion liner 20, corresponding to part of the combustion liner 20 in the axial direction Da and part of the combustion liner 20 in the circumferential direction Dc.

Like the restrictor 40 according to the above-described first embodiment, a restrictor 40a according to the present embodiment includes the connecting portion 41 connected to the inner circumferential surface of the combustion liner 20 and a diameter reducing portion 42a formed integrally with the connecting portion 41. In the diameter reducing portion 42a, the inner diameter of the restrictor 40a gradually decreases as the restrictor 40a extends toward the downstream side. In the present embodiment too, an inner diameter of a downstream end of the diameter reducing portion 42a corresponds to the minimum restrictor diameter 43, where the inner diameter of the diameter reducing portion 42a is the narrowest. However, in the diameter reducing portion 42a of the restrictor 40a in the present embodiment, a plurality of cuts are defined and arranged in the circumferential direction Dc. The plurality of cuts are cut outward in the radial direction and upstream from the position of the minimum restrictor diameter 43. The plurality of cuts form minimum restrictor portions 44 and medium restrictor portions 45 in the diameter reducing portion 42a, alternately in the circumferential direction Dc. The minimum restrictor portions 44 are parts corresponding to the minimum restrictor diameter 43. The medium restrictor portions 45 are at a greater diameter than the minimum restrictor diameter 43. A side 44x that forms the minimum restrictor diameter 43 and a side 44y where the minimum restrictor portion 44 transitions to the medium restrictor portion 45 form a corner at each position of an end 44z of the minimum restrictor portion 44 in the circumferential direction Dc.

In the present embodiment, the number of the plurality of sound attenuators 30a arranged in the circumferential direction Dc, the number of the minimum restrictor portions 44 in the restrictor 40a, and the number of the medium restrictor portions 45 in the restrictor 40a are the same. Additionally, each sound attenuator 30a is disposed within a region W through which virtual lines Lv pass. The virtual lines Lv extend in the axial direction Da from the ends 44z of the minimum restrictor portions 44 in the circumferential direction Dc. To rephrase, the entire minimum restrictor portion 44 in the circumferential direction Dc is present on the downstream side of the corresponding sound attenuator 30a.

A vortex S1a that is stronger than in other parts of the restrictor 40a is formed on the downstream side of the end 44z of the minimum restrictor portion 44 in the circumferential direction Dc, or in other words, on the downstream side of the corner of the restrictor 40a. As such, when a corner of the restrictor 40a is present on the downstream side of each sound attenuator 30a, even if the premixed gas is cooled by air discharged into the combustion liner 20 from acoustic cases 31a and CO is produced as a result, that CO can be efficiently burned on the downstream sides of the corners of the restrictor 40a.

Accordingly, as long as at least one corner of the restrictor 40a is present on the downstream side of each sound attenuator 30a, even if CO is produced by the air discharged into the combustion liner 20 from the acoustic cases 31a, that CO can be efficiently burned. Thus as illustrated in FIG. 8, for example, even in a case where the entirety of one of the medium restrictor portions 45 in the circumferential direction Dc is present on the downstream side of the corresponding sound attenuator 30a, the CO can be efficiently burned as long as at least one of the corners of the restrictor 40a is present on the downstream side of the corresponding sound attenuator 30a.

Although the present embodiment describes an example in which the restrictor 40a is disposed on the downstream side of the sound attenuators 30a, employing the restrictor 40a according to the present embodiment makes it possible to achieve the same effects even in a case where the restrictor is disposed in a region in the axial direction Da where the sound attenuator is present, as in the second embodiment, a case where the restrictor is disposed upstream from the sound attenuator, as in the third embodiment, and the like.

### First Modified Example of Combustor

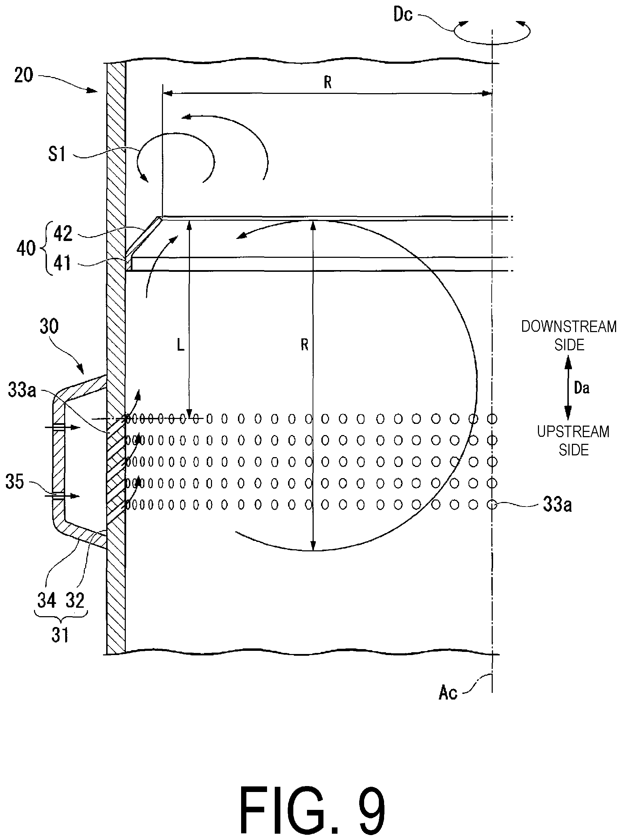

A first modified example of the combustor will be described using FIG. 9.

In the combustor according to the modified example, the direction in which the through-holes 33 penetrate is different from that in the combustor according to the above-described first embodiment. Other configurations are the same as in the combustor according to the above-described first embodiment.

Through-holes 33a according to the present modified example penetrate the liner-side case formation plate portion 32 and shift from upstream to downstream gradually as the through-holes extend from the outside in the radial direction toward the inside in the radial direction. As such, air discharged from the acoustic case 31 into the combustion liner 20 through the through-holes 33a flows along the inner circumferential surface of the combustion liner 20, and then also flows along a surface of the restrictor 40. As such, according to the present modified example, the restrictor 40 can be cooled through film cooling by the air discharged from the acoustic case 31, which makes it possible to suppress thermal damage to the restrictor 40. The air flowing along the surface of the restrictor 40 mixes with the high-temperature combustion gas in the vortex S1 formed on the downstream side of the restrictor 40, in the same manner as in the above-described first embodiment.

### Second Modified Example of Combustor

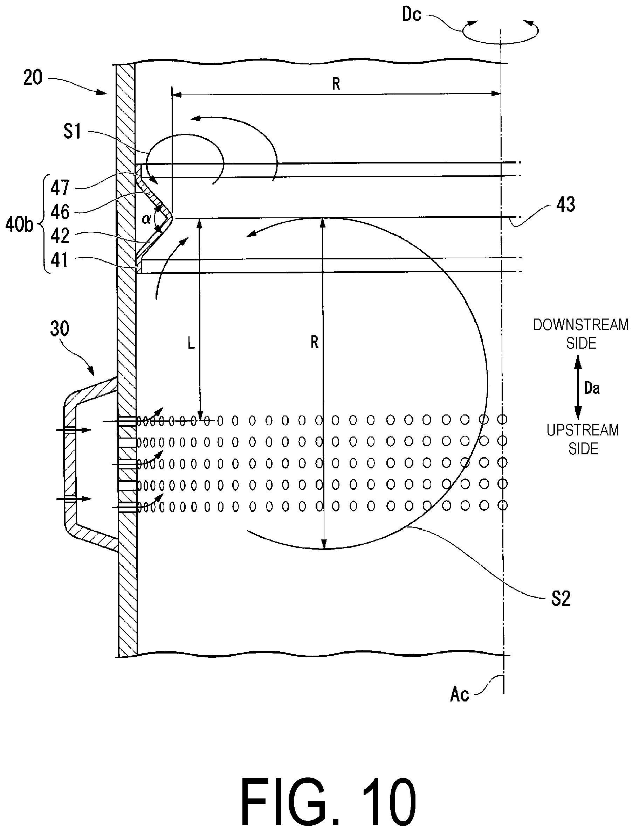

A second modified example of the combustor will be described using FIG. 10.

In the combustor according to the present modified example, the shape of the restrictor 40 is different from that in the combustor according to the above-described first embodiment. Other configurations are the same as in the combustor according to the above-described first embodiment.

With the restrictor 40 according to the above-described first embodiment, the vortex S1 is formed on the downstream side of the minimum restrictor diameter 43, and thus there are no parts of the restrictor 40 present downstream from the minimum restrictor diameter 43. However, as long as the vortex S1 can be formed on the downstream side of the minimum restrictor diameter 43, part of the restrictor may be present downstream from the minimum restrictor diameter 43. Specifically, the restrictor may include, downstream from the minimum restrictor diameter 43, a diameter expanding portion of which the inner diameter gradually increases as the diameter expanding portion extends downstream. For example, this restrictor 40b includes an upstream-side connecting portion 41, the diameter reducing portion 42, a diameter expanding portion 46, and a downstream-side connecting portion 47. The upstream-side connecting portion 41 is connected to the inner circumferential surface of the combustion liner 20. The diameter reducing portion 42 is formed integrally with the upstream-side connecting portion 41. The inner diameter of the diameter reducing portion 42 gradually decreases as the diameter reducing portion 42 extends downstream. The diameter expanding portion 46 is connected to a downstream end of the diameter reducing portion 42. The inner diameter of the diameter expanding portion 46 gradually increases as the diameter expanding portion 46 extends downstream. The downstream-side connecting portion 47 is connected to a downstream end of the diameter expanding portion 46 and the inner circumferential surface of the combustion liner 20.

The minimum restrictor diameter 43 corresponds to the position of the downstream end of the diameter reducing portion 42, or in other words, the position of an upstream end of the diameter expanding portion 46. Preferably, an angle • of a surface of the diameter expanding portion 46 relative to a surface of the diameter reducing portion 42 is no greater than 145°, for example, to ensure that the flow of the vortex S1 is formed on the downstream side of the minimum restrictor diameter 43. Here, to connect the restrictor 40b to the inner circumferential surface of the combustion liner 20, the restrictor 40b according to the present modified example includes the upstream-side connecting portion 41 and the downstream-side connecting portion 47. However, one of the upstream-side connecting portion 41 and the downstream-side connecting portion 47 may be omitted.

### Third Modified Example of Combustor

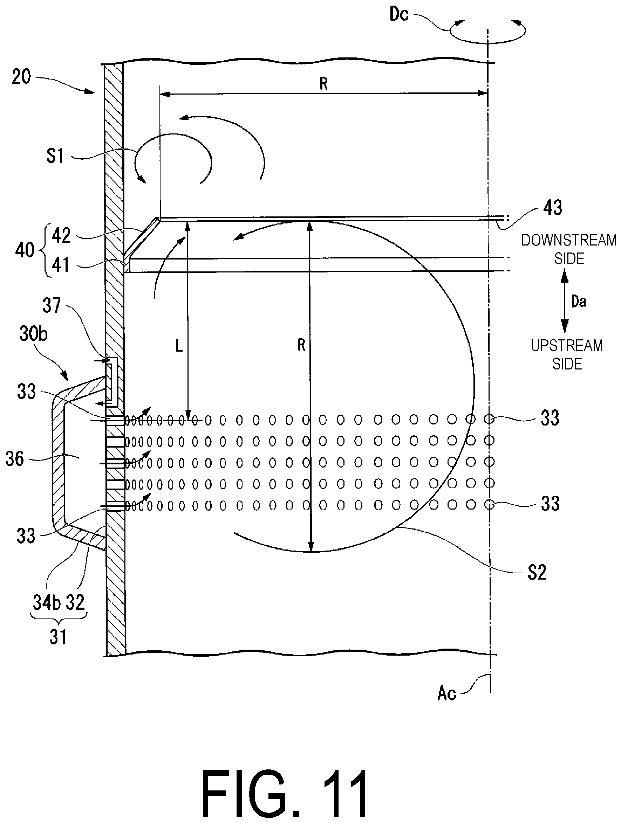

A third modified example of the combustor will be described using FIG. 11.

In the combustor according to the present modified example, the positions of the passages 35 that allow the interior of the resonance space 36 to communicate with the exterior are different from those in the combustor according to the above-described first embodiment. Other configurations are the same as in the combustor according to the above-described first embodiment.

In the above-described first embodiment, the passages 35 that allow the interior of the resonance space 36 to communicate with the exterior are provided in the acoustic cover 34. However, as long as the passages enable air to be supplied to the interior of the resonance space 36 from the exterior, the passages are not limited to the passages 35. For example, as illustrated in FIG. 11, a passage 37 may be provided in the combustion liner 20 instead of the passages 35. An opening of the passage 37 is defined in a part of the outer circumferential surface of the combustion liner 20 that is not covered by an acoustic cover 34b of a sound attenuator 30b. The passage 37 passes between the outer circumferential surface and inner circumferential surface of the combustion liner 20, and another opening of the passage 37 is defined in a part of the outer circumferential surface of the combustion liner 20 that is covered by the acoustic cover 34b.

### Industrial Applicability

According to an aspect of the present invention, an amount of CO discharged can be reduced.

### Reference Signs List

1 Compressor
4 Combustor
5 Turbine
20 Combustion liner
30, 30a, 30b Sound attenuator
31, 31a Acoustic case
32, 32a Liner-side case formation plate portion
33, 33a Through-hole
34, 34a, 34b Acoustic cover
35, 37 Passage
36, 36a Resonance space
40, 40a, 40b Restrictor
41 Connecting portion (upstream-side connecting portion)
42, 42a Diameter reducing portion
43 Minimum restrictor diameter
44 Minimum restrictor portion
44z End of minimum restrictor portion
45 Medium restrictor portion
46 Diameter expanding portion
47 Downstream-side connecting portion

## Claims

1. A combustor (4) comprising:
a combustion liner (20) having a tubular shape centered on an axis (Ac) and configured to allow a fuel to be burned on an inner circumferential side of the combustion liner (20);
a sound attenuator (30, 30a, 30b) including
part of a plate forming the combustion liner (20), and
an acoustic cover (34, 34a, 34b) defining, in conjunction with the part of the plate, a space (36, 36a) on an outer circumferential side of the combustion liner (20) wherein at least one passage (35) penetrating to the space (36, 36a) from an exterior is defined in the acoustic cover (34, 34a, 34b) of the sound attenuator (30, 30a, 30b); and
a restrictor (40, 40a, 40b) configured to, in a part in an axial direction (Da) in which the axis (Ac) extends, narrow and then widen a flow path of a gas flowing in the combustion liner (20), as the restrictor (40, 40a, 40b) extends from an upstream side that is one side in the axial direction (Da) toward a downstream side that is another side in the axial direction (Da), wherein
a plurality of through-holes (33, 33a), penetrating to the space (36, 36a) from within the combustion liner (20) is are defined in the part of the plate of the sound attenuator (30, 30a, 30b);
the combustor (4) **characterized in that**:
a relative position in the axial direction (Da) of the restrictor (40, 40a, 40b) with respect to the sound attenuator (30, 30a, 30b) is a position such that at least some of the plurality of through-holes (33, 33a) in the sound attenuator (30, 30a, 30b) are present within a region spanning, in the axial direction (Da), from a position of a minimum restrictor diameter (43) of the restrictor (40, 40a, 40b) to positions, on an upstream side and a downstream side, at a distance equivalent to a minimum restrictor radius (R) that is half the minimum restrictor diameter (43).

2. The combustor (4) according to claim 1,
wherein the restrictor (40, 40a, 40b) is disposed downstream from the sound attenuator (30, 30a, 30b).

3. The combustor (4) according to claim 2,
wherein the plurality of through-holes (33a) in the sound attenuator (30, 30a, 30b) are defined so as to shift downstream gradually as the plurality of through-holes (33a) extend from the outer circumferential side of the combustion liner (20) toward the inner circumferential side of the combustion liner (20).

4. The combustor (4) according to claim 1,
wherein the restrictor (40, 40a, 40b) is disposed within a region, in the axial direction (Da), in which the sound attenuator (30, 30a, 30b) is present.

5. The combustor (4) according to claim 1,
wherein the restrictor (40, 40a, 40b) is disposed upstream from the sound attenuator (30, 30a, 30b).

6. The combustor (4) according to any one of claims 1 to 5,
wherein the plurality of through-holes (33, 33a) penetrating to the space from within the combustion liner (20) are defined in the part of the plate of the sound attenuator (30, 30a, 30b); and
a relative position in the axial direction (Da) of the restrictor (40, 40a, 40b) with respect to the sound attenuator (30, 30a, 30b) is a position such that all of the plurality of through-holes (33, 33a) in the sound attenuator (30, 30a, 30b) are present within a region spanning, in the axial direction (Da), from a position of the minimum restrictor diameter (43) to positions, on an upstream side and a downstream side, at a distance equivalent to the minimum restrictor radius (R).

7. The combustor (4) according to any one of claims 1 to 6,
wherein a plurality of the sound attenuators (30a) are disposed at intervals in a circumferential direction (Dc) based on the axis (Ac).

8. The combustor (4) according to any one of claims 1 to 7,
wherein a minimum restrictor portion (44) that is a part of the restrictor (40, 40a, 40b) having the minimum restrictor diameter (43), and a medium restrictor portion (45) that is a part of the restrictor having a medium restrictor diameter greater than the minimum restrictor diameter (43), are formed in the restrictor alternately in the circumferential direction (Dc).

9. The combustor (4) according to claim 8,
wherein a plurality of the sound attenuators (30a) are disposed at intervals in the circumferential direction (Dc) based on the axis (Ac); and
each of the plurality of sound attenuators (30a) is disposed within a region through which virtual lines pass, the virtual lines extending in the axial direction (Da) from ends (44z) of a corresponding minimum restrictor (40a) portion of a plurality of the minimum restrictor portions (44) in the circumferential direction (Dc).

10. The combustor (4) according to any one of claims 1 to 9,
wherein at least one passage (37) is defined in the combustion liner (20), an opening of the at least one passage (37) being defined in a part of the outer circumferential surface of the combustion liner (20) that is not covered by the acoustic cover (34b), the at least one passage (37) passing between the outer circumferential surface and the inner circumferential surface of the combustion liner (20), another opening of the at least one passage (37) being defined in a part of the outer circumferential surface of the combustion liner (20) that is covered by the acoustic cover (34b).

11. A gas turbine comprising:
the combustor (4) according to any one of claims 1 to 10;
a compressor (1) that compresses air and supplies the air to the combustor (4); and
a turbine (5) that is driven by combustion gas formed by a fuel being burned in the combustor (4).

## Patentansprüche

1. Eine Brennkammer (4), umfassend:
eine Brennkammerauskleidung (20), die eine auf einer Achse (Ac) zentrierte rohrfömrige Form aufweist und so konfiguriert ist, dass ein Brennstoff auf einer inneren Umfangsseite der Brennkammerauskleidung (20) verbrannt werden kann;
einen Schalldämpfer (30, 30a, 30b), der einen Teil einer Platte, die die Brennkammerauskleidung (20) bildet, beinhaltet und eine akustische Abdeckung (34, 34a, 34b), die Zusammen mit dem Teil der Platte einen Raum (36, 36a) auf einer äußeren Umfangsseite der Brennkammerauskleidung (20) definiert, wobei
mindestens ein Durchgang (35), der von außen in den Raum (36, 36a) eindringt, in der akustischen Abdeckung (34, 34a, 34b) des Schalldämpfers (30, 30a, 30b) definiert ist; und
eine Drossel (40, 40a, 40b), die so konfiguriert ist, dass sie in einem Teil in einer axialen Richtung (Da), in der sich die Achse (Ac) erstreckt, einen Strömungsweg eines Gases, das in der Brennkammerauskleidung (20) strömt, verengt und dann erweitert, da sich die Drossel (40, 40a, 40b) von einer stromaufwärtigen Seite, die eine Seite in der axialen Richtung (Da) ist, zu einer stromabwärtigen Seite, die eine andere Seite in der axialen Richtung (Da) ist, erstreckt, wobei
in dem Teil der Platte des Schalldämpfers (30, 30a, 30b) eine Vielzahl von Durchgangslöchern (33, 33a) definiert ist, die von innerhalb der Brennkammerauskleidung (20) in den Raum (36, 36a) eindringen;
die Brennkammer (4) ist **dadurch gekennzeichnet, dass**:
eine relative Position in der axialen Richtung (Da) der Drossel (40, 40a, 40b) in Bezug auf den Schalldämpfer (30, 30a, 30b) eine solche Position ist, dass zumindest einige der Vielzahl von Durchgangslöchern (33, 33a) in dem Schalldämpfer (30, 30a, 30b) innerhalb eines Bereichs vorhanden sind, der sich in der axialen Richtung (Da), von einer Position eines minimalen Drosseldurchmessers (43) der Drossel (40, 40a, 40b) zu Positionen auf einer stromaufwärtigen Seite und einer stromabwärtigen Seite erstreckt, in einem Abstand, der einem minimalen Drosselradius (R) entspricht, der die Hälfte des minimalen Drosseldurchmessers (43) beträgt.

2. Die Brennkammer (4) nach Anspruch 1,
wobei die Drossel (40, 40a, 40b) stromabwärts des Schalldämpfers (30, 30a, 30b) angeordnet ist.

3. Die Brennkammer (4) nach Anspruch 2,
wobei die Vielzahl von Durchgangslöchern (33a) in dem Schalldämpfer (30, 30a, 30b) so definiert sind, dass sie sich stromabwärts sukzessive verschieben, wenn sich die Vielzahl von Durchgangslöchern (33a) von der äußeren Umfangsseite der Brennkammerauskleidung (20) zu der inneren Umfangsseite der Brennkammerauskleidung (20) erstreckt.

4. Die Brennkammer (4) nach Anspruch 1,
wobei die Drossel (40, 40a, 40b) innerhalb eines Bereichs in axialer Richtung (Da) angeordnet ist, in dem der Schalldämpfer (30, 30a, 30b) vorhanden ist.

5. Die Brennkammer (4) nach Anspruch 1,
wobei die Drossel (40, 40a, 40b) stromaufwärts von dem Schalldämpfer (30, 30a, 30b) angeordnet ist.

6. Die Brennkammer (4) nach einem der Ansprüche 1 bis 5,
wobei die Mehrzahl von Durchgangslöchern (33, 33a), die vom Inneren der Brennkammerauskleidung (20) in den Raum hineinragen, in dem Teil der Platte des Schalldämpfers (30, 30a, 30b) definiert sind; und
eine relative Position in der axialen Richtung (Da) der Drossel (40, 40a, 40b) in Bezug auf den Schalldämpfer (30, 30a, 30b) eine solche Position ist, dass alle der Mehrzahl von Durchgangslöchern (33, 33a) in dem Schalldämpfer (30, 30a, 30b) innerhalb eines Bereichs vorhanden sind, der sich in der axialen Richtung (Da) von einer Position des minimalen Drosseldurchmessers (43) zu Positionen auf einer stromaufwärtigen Seite und einer stromabwärtigen Seite in einem Abstand, der dem minimalen Drosselradius (R) entspricht, erstreckt.

7. Die Brennkammer (4) nach einem der Ansprüche 1 bis 6,
wobei eine Mehrzahl der Schalldämpfer (30a) in einer Umfangsrichtung (Dc) in Abständen angeordnet sind, die auf der Achse (Ac) basieren.

8. Die Brennkammer (4) nach einem der Ansprüche 1 bis 7,
wobei ein minimaler Drosselabschnitt (44), der ein Teil der Drossel (40, 40a, 40b) mit dem minimalen Drosseldurchmesser (43) ist, und ein mittlerer Drosselabschnitt (45), der ein Teil der Drossel mit einem mittleren Drosseldurchmesser ist, der größer als der minimale Drosseldurchmesser (43) ist, in der Drossel abwechselnd in der Umfangsrichtung (Dc) ausgebildet sind.

9. Die Brennkammer (4) nach Anspruch 8,
wobei eine Mehrzahl der Schalldämpfer (30a) in der Umfangsrichtung (Dc) in Abständen auf der Grundlage der Achse (Ac) angeordnet sind; und
jeder der Mehrzahl von Schalldämpfern (30a) innerhalb eines Bereichs angeordnet ist, durch den virtuelle Linien verlaufen, wobei sich die virtuellen Linien in axialer Richtung (Da) von Enden (44z) eines entsprechenden Minimaldrossel-(40a)-Abschnitts einer Vielzahl der Minimaldrossel-Abschnitte (44) in Umfangsrichtung (Dc) erstrecken.

10. Die Brennkammer (4) nach einem der Ansprüche 1 bis 9,
wobei mindestens ein Durchgang (37) in der Brennkammerauskleidung (20) definiert ist, wobei eine Öffnung des mindestens einen Durchgangs (37) in einem Teil der äußeren Umfangsfläche der Brennkammerauskleidung (20) definiert ist, der nicht durch die akustische Abdeckung (34b) abgedeckt ist, wobei der mindestens eine Durchgang (37) zwischen der äußeren Umfangsfläche und der inneren Umfangsfläche der Brennkammerauskleidung (20) verläuft, wobei eine weitere Öffnung des mindestens einen Durchgangs (37) in einem Teil der äußeren Umfangsfläche der Brennkammerauskleidung (20) definiert ist, der durch die akustische Abdeckung (34b) abgedeckt ist.

11. Eine Gasturbine, umfassend:
die Brennkammer (4) nach einem der Ansprüche 1 bis 10;
einen Kompressor (1), der Luft verdichtet und der Brennkammer (4) zuführt; und
eine Turbine (5), die von einem Verbrennungsgas angetrieben wird, das durch einen Brennstoff gebildet wird, der in die Brennkammer (4) verbrannt wird.

## Revendications

1. Chambre de combustion (4) comprenant :
une chemise de chambre de combustion (20) ayant une forme tubulaire centrée sur un axe (Ac) et conçue pour permettre à un combustible de brûler sur un côté périphérique intérieur de la chemise de chambre de combustion (20) ;
un atténuateur acoustique (30, 30a, 30b) contenant
une partie d'une plaque formant la chemise de chambre de combustion (20), et
un capot d'insonorisation (34, 34a, 34b) définissant, conjointement avec la partie de la plaque, un espace (36, 36a) sur un côté périphérique extérieur de la chemise de chambre de combustion (20),
dans laquelle au moins un passage (35) pénétrant dans l'espace (36, 36a) à partir de l'extérieur est défini dans le capot d'insonorisation (34, 34a, 34b) de l'atténuateur acoustique (30, 30a, 30b) ; et
un restricteur (40, 40a, 40b) conçu pour, dans une partie dans une direction axiale (Da) dans laquelle s'étend l'axe (Ac), rétrécir puis élargir une trajectoire de gaz s'écoulant dans la chemise de la chambre de combustion (20) au fur et à mesure que le restricteur (40, 40a, 40b) s'étend d'un côté amont qui est un côté dans la direction axiale (Da) vers un côté aval qui est un autre côté de la direction axiale (Da), dans lequel
une pluralité de trous traversants (33, 33a) pénétrant dans l'espace (36, 36a) à partir de l'intérieur de la chemise de chambre de combustion (20) sont définis dans la partie de la plaque de l'atténuateur acoustique (30, 30a, 30b) ;
la chambre de combustion (4) étant **caractérisée en ce que** :
une position relative dans la direction axiale (Da) du restricteur (40, 40a, 40b) par rapport à l'atténuateur acoustique (30, 30a, 30b) est une position telle qu'au moins certains de la pluralité de trous traversants (33, 33a) se trouvant dans l'atténuateur acoustique (30, 30a, 30b) soient présents dans une région s'étendant, dans la direction axiale (Da), d'une position d'un diamètre minimal (43) du restricteur (40, 40a, 40b) à des positions, sur un côté amont et un côté aval, à une distance équivalente à un rayon minimal de restricteur (R) qui est la moitié du diamètre minimal de restricteur (43).

2. Chambre de combustion (4) selon la revendication 1,
dans laquelle le restricteur (40, 40a, 40b) est disposé en aval de l'atténuateur acoustique (30, 30a, 30b).

3. Chambre de combustion (4) selon la revendication 2, dans laquelle la pluralité de trous traversants (33a) se trouvant dans l'atténuateur acoustique (30, 30a, 30b) sont définis de façon à se décaler progressivement vers l'aval au fur et à mesure que la pluralité de trous traversants (30a) s'étendent du côté périphérique extérieur de la chemise de chambre de combustion (20) vers le côté périphérique intérieur de la chemise de chambre de combustion (20).

4. Chambre de combustion (4) selon la revendication 1,
dans laquelle le restricteur (40, 40a, 40b) est disposé dans une région, dans la direction axiale (Da), dans laquelle l'atténuateur acoustique (30, 30a, 30b) est présent.

5. Chambre de combustion (4) selon la revendication 1,
dans laquelle le restricteur (40, 40a, 40b) est disposé en amont de l'atténuateur acoustique (30, 30a, 30b).

6. Chambre de combustion (4) selon l'une des revendications 1 à 5,
dans laquelle la pluralité de trous traversants (33, 33a) pénétrant dans l'espace à partir de l'intérieur de la chemise de chambre de combustion (20) sont définis dans la partie de la plaque de l'atténuateur acoustique (30, 30a, 30b) ; et
une position relative dans la direction axiale (Da) du restricteur (40, 40a, 40b) par rapport à l'atténuateur acoustique (30, 30a, 30b) est une position telle que la totalité de la pluralité de trous traversants (33, 33a) dans l'atténuateur acoustique (30, 30a, 30b) soient présents à l'intérieur d'une région s'étendant, dans la direction axiale (Da), d'une position du diamètre minimal de restricteur (43) à des positions, sur un côté amont et un côté aval, à une distance équivalente au rayon minimal de restricteur (R).

7. Chambre de combustion (4) selon l'une des revendications 1 à 6,
dans laquelle une pluralité d'atténuateurs acoustiques (30a) sont disposés à intervalles dans une direction périphérique (Dc) par rapport à l'axe (Ac).

8. Chambre de combustion (4) selon l'une des revendications 1 à 7,
dans laquelle une portion minimale de restricteur (44) qui est une partie du restricteur (40, 40a, 40b) ayant le diamètre minimal de restricteur (43), et une portion centrale de restricteur (40) qui est une partie du restricteur ayant un diamètre central de restricteur plus grand que le diamètre minimal de restricteur (43), sont formées dans le restricteur en alternance dans la direction périphérique (Dc).

9. Chambre de combustion (4) selon la revendication 8,
dans laquelle une pluralité d'atténuateurs acoustiques (30a) sont disposés à intervalles dans la direction périphérique (Dc) par rapport à l'axe (Ac) ; et
chacun de la pluralité d'atténuateurs acoustiques (30a) est disposé à l'intérieur d'une région par laquelle passent des lignes virtuelles, les lignes virtuelles s'étendant dans la direction axiale (Da) à partir d'extrémités (44z) d'une portion minimale de restricteur (40a) correspondante d'une pluralité de portions minimales de restricteur (44) dans la direction périphérique (Dc).

10. Chambre de combustion (4) selon l'une des revendications 1 à 9,
dans laquelle au moins un passage (37) est défini dans la chemise de chambre de combustion (20), une ouverture de l'au moins un passage (37) étant définie dans une partie de la surface périphérique extérieure de la chemise de chambre de combustion (20) qui n'est pas couverte par le capot d'insonorisation (34b), l'au moins un passage (37) passant entre la surface périphérique extérieure et la surface périphérique intérieure de la chemise de chambre de combustion (20), une autre ouverture de l'au moins un passage (37) étant définie dans une partie de la surface périphérique extérieure de la chemise de chambre de combustion (20) qui est couverte par le capot d'insonorisation (34b).

11. Turbine à gaz comprenant :
la chambre de combustion (4) selon l'une des revendications 1 à 10 ;
un compresseur (1) qui comprime l'air et envoie l'air à la chambre de combustion (4) ; et
une turbine (5), qui est entrainée par les gaz de combustion formés par un combustible brûlé dans la chambre de combustion (4).
